# EUROPÄISCHE PATENTSCHRIFT

(11) **EP 3 173 184 B1**
(45) Veröffentlichungstag und Bekanntmachung des Hinweises auf die Patenterteilung: **01.08.2018**
(21) Anmeldenummer: 16002460.0
(22) Anmeldetag: 18.11.2016
(51) Int. Cl.: B23P 15/00, F16D 23/02, F16D 23/06

(54) **VERFAHREN ZUR HERSTELLUNG EINES DOPPELKONUS-SYNCHRONRINGS**
METHOD FOR MANUFACTURING A DOUBLE CONE SYNCHRONIZING RING
PROCÉDÉ DE FABRICATION D'UNE BAGUE DE SYNCHRONISATION À DOUBLE CÔNE

(30) Priorität: 27.11.2015 DE 102015015411
(43) Veröffentlichungstag der Anmeldung: 31.05.2017
(73) Patentinhaber: Diehl Metall Stiftung & Co. KG, 90552 Röthenbach (DE)
(72) Erfinder: Wosch, Stefan, 90552 Röthenbach a. d. Pegnitz (DE); Prechtl, Rudi, 91227 Leinburg (Diepersdorf) (DE); Krischke, Stefan, 90480 Nürnberg (DE)
(74) Vertreter: Diehl Patentabteilung

(56) Entgegenhaltungen:
- EP-A1- 0 821 175
- EP-A1- 2 561 938
- DE-A1- 10 021 710
- DE-A1- 19 537 209
- DE-A1-102009 007 849
- DE-A1-102010 036 280
- DE-A1-102011 016 238
- JP-A- 2001 355 030

## Beschreibung

Die Erfindung betrifft ein Verfahren zur Herstellung eines Doppelkonus-Synchronrings nach dem Oberbegriff des Anspruchs 1.

Ein solches Verfahren ist aus der DE 10 2011 016238 A1 bekannt. Nach dem Stand der Technik sind Synchronringe für Schaltgetriebe, insbesondere für Schaltgetriebe von Kraftfahrzeugen, allgemein bekannt. Es wird beispielhaft auf die DE 10 2005 007 957 A1 verwiesen.

Üblicherweise weisen Synchronringe an ihrer Innenseite und/oder ihrer Außenseite eine konische Fläche auf. Sofern der Synchronring sowohl an der Innenseite als auch an der gegenüberliegenden Außenseite eine konische Fläche aufweist, verlaufen diese Flächen üblicherweise parallel.

Die vorliegende Erfindung betrifft dagegen die Herstellung eines Synchronrings, welcher an seiner Innenseite mit zwei konischen Flächen versehen ist. Die beiden konischen Flächen sind so ausgebildet, dass sie sich jeweils von einer Stirnseite in Richtung der gegenüberliegenden anderen Stirnseite hin verjüngen. Infolgedessen ist an der Innenseite etwa mittig eine radial umlaufende Kante gebildet. Im Sinne der vorliegenden Erfindung wird unter einem "Doppelkonus-Synchronring" ein Synchronring verstanden, welcher an seiner Innenseite zwei konische Flächen aufweist, von denen sich jede zu einer der Stirnseiten hin erweitert.

Aufgabe der Erfindung ist es, ein möglichst einfaches und kostengünstiges Verfahren zur Herstellung eines Doppelkonus-Synchronrings anzugeben.

Diese Aufgabe wird durch die Merkmale des Patentanspruchs 1 gelöst. Zweckmäßige Ausgestaltungen der Erfindung ergeben sich aus den Merkmalen der Patentansprüche 2 bis 6. Nach Maßgabe der Erfindung wird zur Herstellung eines Doppelkonus-Synchronrings ein Verfahren mit folgenden Schritten vorgeschlagen:
Herstellen eines ersten Synchronringabschnitts und eines zweiten Synchronringabschnitts derart, dass der erste und der zweite Synchronringabschnitt jeweils an seiner radial umlaufenden Außenfläche in der Nähe einer ersten Stirnseite einen Zahnkranz und jeweils eine von der ersten Stirnseite zu einer gegenüberliegenden zweiten Stirnseite hin sich verjüngende konische Innenfläche aufweist, und
Fügen des ersten und des zweiten Synchronringabschnitts, so dass deren zweite Stirnseiten aufeinanderliegen.

Im Sinne der vorliegenden Erfindung wird unter dem Begriff "Stirnseite" eine Seite bzw. Fläche des Synchronringabschnitts verstanden, welche senkrecht zur Achse bzw. Drehachse des Synchronringabschnitts verläuft. Eine erste und eine zweite Stirnseite des Synchronringabschnitts verlaufen im Wesentlichen parallel zueinander.

Nach dem erfindungsgemäßen Verfahren werden zunächst ein erster und ein zweiter Synchronringabschnitt hergestellt. Die Synchronringabschnitte werden im ersten Verfahrensschritt zumindest abschnittsweise mit einem Übermaß hergestellt. In einem zweiten Verfahrensschritt erfolgt sodann optional ein spanabhebendes Bearbeiten der Synchronringabschnitte. Dabei werden die mit einem Übermaß hergestellten Flächen auf ein vorgegebenes Maß bzw. eine vorgegebene Ausgestaltung gebracht. Vorzugsweise erfolgt das optionale spanabhebende Bearbeiten der Synchronringabschnitte jeweils zumindest im Bereich der ersten Stirnseite, so dass die erste Stirnseite den Zahnkranz schneidet. Schließlich werden die spanabhebend bearbeiteten Synchronringabschnitte in einem dritten Verfahrensschritt miteinander verbunden, so dass sie mit ihren zweiten Stirnseiten aufeinanderliegen.

Mit dem erfindungsgemäßen Verfahren lässt sich ein Doppelkonus-Synchronring relativ einfach und kostengünstig herstellen. Zur Herstellung der Synchronringabschnitte kann auf Produktionsmittel zurückgegriffen werden, wie sie für die Herstellung herkömmlicher Synchronringe mit einer einzigen Innenkonusfläche verwendet werden.

Nach einer vorteilhaften Ausgestaltung werden der erste und der zweite Synchronringabschnitt mittels Umformen aus einem Halbzeug hergestellt. Das Umformen wird vorteilhafterweise mittels Gesenkschmieden oder Kaltumformen durchgeführt. Dabei kann das Halbzeug beispielsweise aus Messing, Stahl oder dgl. hergestellt sein. Es ist auch möglich, den ersten und den zweiten Synchronringabschnitt mittels Sintern aus einem Metallpulver herzustellen.

Nach einer vorteilhaften Ausgestaltung werden der erste und der zweite Synchronringabschnitt in identischer Ausbildung, vorzugsweise unter Verwendung desselben Werkzeugs, hergestellt. Damit können weiter Herstellungskosten eingespart werden.

Das Halbzeug wird mittels eines Umformverfahrens (beispielsweise Halbwarmumformen oder Kaltmassivumformen) umgeformt. Dabei ist das Halbzeug zweckmäßigerweise aus Messing hergestellt. Auch eine Kaltumformung kommt in Betracht.

Vorteilhafterweise werden sodann in die konischen Innenflächen der Synchronringabschnitte mittels spanabhebender Bearbeitung radial umlaufende oder gewindeförmige erste Rillen eingearbeitet. Durch die ersten Rillen wird die Ausbildung einer Öl-Gleitschicht zwischen der Konusfläche und einer dazu korrespondierenden weiteren Konusfläche z. B. an einem Losrad vermieden.

Nach einer weiteren vorteilhaften Ausgestaltung sind in den konischen Innenflächen axial verlaufende zweite Rillen vorgesehen. Auch die zweiten Rillen tragen zur Vermeidung der Ausbildung einer Öl-Gleitschicht bei. Die zweiten Rillen können bereits beim Umformen hergestellt werden.

Alternativ können die vorstehend im Zusammenhang mit den ersten und zweiten Rillen beschriebenen Funktionen auch durch das Aufbringen von Reibmaterialien auf den Innenflächenbereich realisiert werden.

Mittels spanabhebender Bearbeitung können auch Bohrungen und/oder Gewindebohrungen hergestellt werden, mit denen unter Verwendung von Schrauben oder Nieten Verbindungen zwischen dem ersten und dem zweiten Synchronringabschnitt hergestellt werden können. Erfindungsgemäß weist der mittels Umformen hergestellte Synchronabschnitt an der zweiten Stirnseite zumindest einen von der zweiten Stirnseite sich in axialer Richtung erstreckenden Verbindungsabschnitt und/oder zumindest eine korrespondierend zum Verbindungsabschnitt ausgebildete Ausnehmung auf. Beim Fügen greift der zumindest eine Verbindungsabschnitt des ersten Synchronringabschnitts in die Ausnehmung am zweiten Synchronringabschnitt ein. Der Verbindungsabschnitt und die Ausnehmung sind zweckmäßigerweise so ausgestaltet, dass durch den Eingriff des Verbindungsabschnitts in die Ausnehmung eine radiale Relativbewegung der miteinander verbundenen ersten und zweiten Synchronringabschnitte verhindert wird. Der Verbindungsabschnitt und die Ausnehmung können ferner so ausgestaltet sein, dass auch eine axiale Relativbewegung der miteinander verbundenen ersten und zweiten Synchronringabschnitte verhindert wird. Erfindungsgemäß ist der Verbindungsabschnitt ein sich von der zweiten Stirnseite in axialer Richtung erstreckender Steg oder Bolzen. Der Steg kann sich über einen Abschnitt des Umfangs erstrecken. Er kann sich auch über den gesamten Umfang des jeweiligen Synchronringabschnitts erstrecken. Es können auch mehrere Stegabschnitte, welche sich vorzugsweise jeweils in Umfangsrichtung erstrecken, vorgesehen sein. Erfindungsgemäß werden an einer der Achse des Synchronringabschnitts zugewandten Steg-Innenseite eine Verbindungsrippe, und in der Ausnehmung eine zur Verbindungsrippe korrespondierende rillenartige Vertiefung jeweils mittels spanabhebender Bearbeitung hergestellt. Das ermöglicht es, den ersten Synchronringabschnitt mit dem zweiten Synchronringabschnitt formschlüssig zu verrasten. Damit kann eine besonders einfache und haltbare Verbindung zwischen dem ersten und dem zweiten Synchronringabschnitt hergestellt werden. Die Verbindung ist dabei so ausgestaltet, dass sowohl eine radiale als auch eine axiale Bewegung der beiden Synchronringabschnitte zueinander verhindert werden.

Der erste Synchronringabschnitt wird erfindungsgemäß mit dem zweiten Synchronringabschnitt durch Herstellen eines Eingriffs der Verbindungsrippe in die dazu korrespondierende rillenartige Vertiefung gefügt. Ein solches Fügen kann durch einfache Ausübung eines axialen Drucks erreicht werden. Zusätzlich kann es erforderlich sein, die Verbindungsrippe in radialer Richtung zu pressen.

Nachfolgend wird ein Ausführungsbeispiel der Erfindung anhand der Zeichnungen näher erläutert. Es zeigen:
- Fig. 1: eine perspektivische Ansicht eines Doppelkonus-Synchronrings,
- Fig. 2: eine perspektivische Ansicht eines ersten und eines zweiten Synchronringabschnitts gemäß Fig. 1,
- Fig. 3: eine perspektivische Ansicht eines Synchronringabschnitts nach dem Umformen,
- Fig. 4: eine weitere perspektivische Ansicht gemäß Fig. 3,
- Fig. 5: eine perspektivische Ansicht eines Synchronringabschnitts nach der spanabhebenden Bearbeitung,
- Fig. 6: eine weitere perspektivische Ansicht gemäß Fig. 5,
- Fig. 7: eine perspektivische Ansicht des ersten und des zweiten Synchronringabschnitts beim Fügen,
- Fig. 8: eine Detailansicht gemäß Fig. 2,
- Fig. 9: eine weitere Detailansicht gemäß Fig. 2 und
- Fig. 10: eine perspektivische Teilschnittansicht gemäß der Schnittlinie A-A' in Fig. 1.

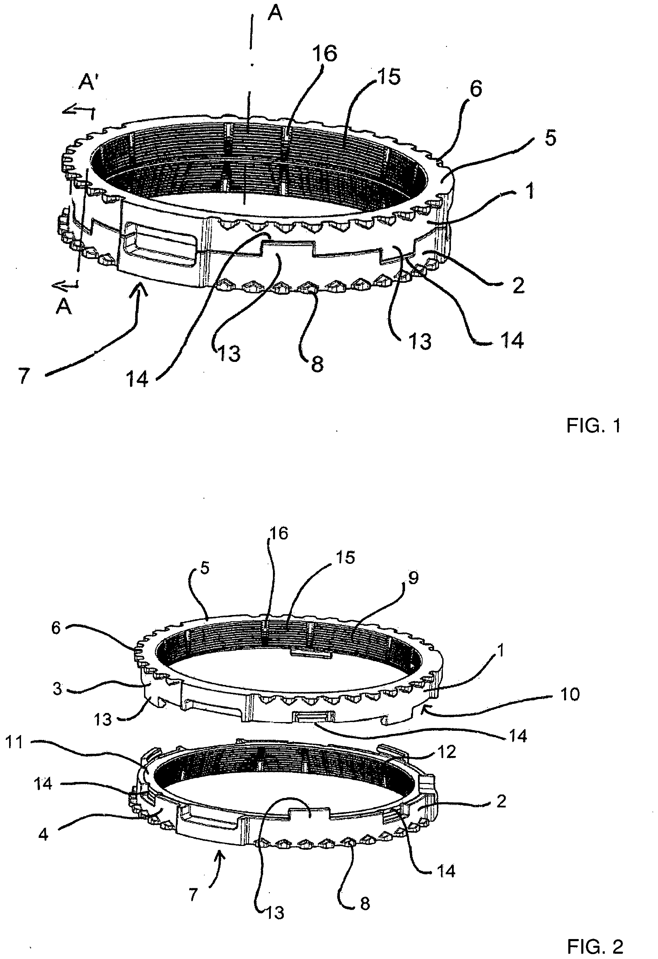

Fig. 1 zeigt eine perspektivische Ansicht eines Doppelkonus-Synchronrings. Der Doppelkonus-Synchronring ist gebildet aus einem ersten Synchronringabschnitt 1, welcher mit einem zweiten Synchronringabschnitt 2 verbunden ist. Der erste 1 und der zweite Synchronringabschnitt 2 sind in Fig. 2 separat dargestellt. Die, hier vorteilhafterweise identisch ausgeführten, ersten 1 und zweiten Synchronringabschnitte 2 weisen jeweils eine radial umlaufende erste 3 sowie zweite Außenseite 4 auf. In der Nähe einer am ersten Synchronringabschnitt 1 vorgesehenen ersten Stirnseite 5 erstreckt sich von der ersten Außenseite 3 ein erster Zahnkranz 6. Analog erstreckt sich von der zweiten Außenseite 4 des zweiten Synchronringabschnitts 2 in der Nähe einer weiteren ersten Stirnseite 7 ein zweiter Zahnkranz 8. Eine der ersten Außenseite 3 gegenüberliegende erste Innenfläche 9 weist eine von der ersten Stirnseite 5 hin zu einer gegenüberliegend ausgebildeten zweiten Stirnseite 10 sich verjüngende konische Fläche auf. Analog weist der zweite Synchronringabschnitt 2 an seiner zweiten Innenfläche 12 eine von der weiteren ersten Stirnseite 7 sich hin zu einer weiteren zweiten Stirnseite 11 sich verjüngende weitere konische Fläche auf.

Von der zweiten Stirnseite 10 sowie der weiteren zweiten Stirnseite 11 erstrecken sich jeweils Stege 13. Ferner weisen die zweite Stirnseite 10 sowie die weitere zweite Stirnseite 11 Ausnehmungen 14 auf, welche korrespondierend zu den Stegen 13 ausgebildet sind. Im vorliegenden Ausführungsbeispiel weist jeder der Synchronringabschnitte 1, 2 jeweils drei Stege 13 sowie drei Ausnehmungen 14 auf. Es kann aber auch sein, dass jeder der Synchronringabschnitte 1, 2 jeweils zwei, vier, fünf oder mehr Stege 13 und dazu korrespondierende Ausnehmungen 14 aufweist.

Wie aus den Fig. 1 und 2 ersichtlich ist, weisen die Innenflächen 9, 12 radial umlaufende erste Rillen 15 sowie axial verlaufende zweite Rillen 16 auf.

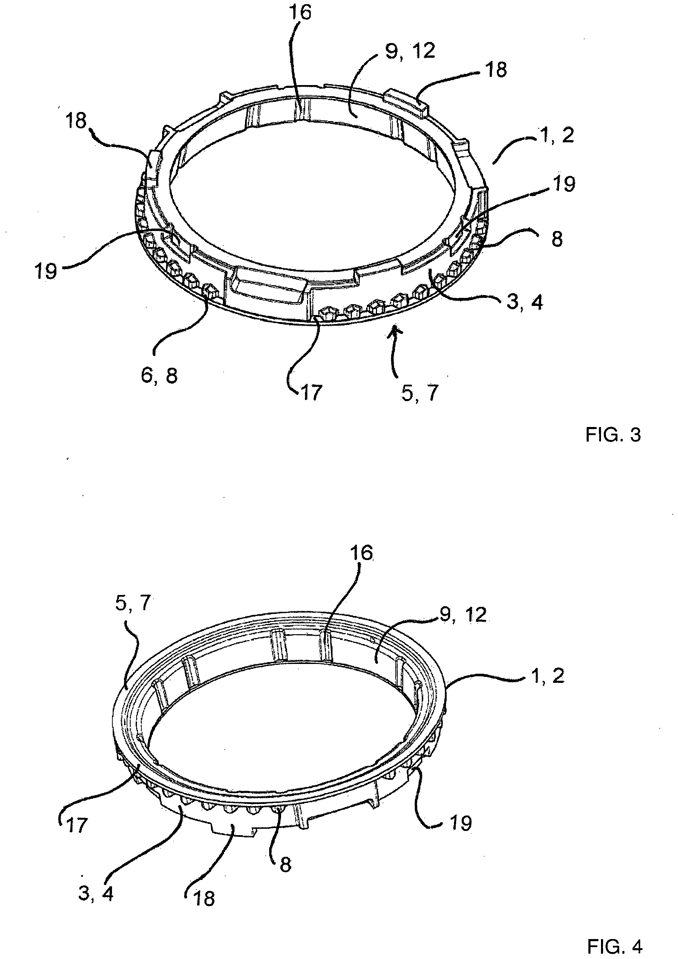

Die Herstellung des in den Fig. 1 und 2 gezeigten Doppelkonus-Synchronrings wird in den Fig. 3 bis 10 näher erläutert.

Die Fig. 3 und 4 zeigen perspektivische Ansichten eines Synchronringabschnitts 1, 2 nach dem Umformen. Der Synchronringabschnitt 1, 2 wird vorzugsweise unter Verwendung desselben Gesenks mittels Umformverfahren (beispielsweise Halbwarmumformen oder Kaltmassivumformen) aus einem Halbzeug hergestellt. Der Synchronringabschnitt 1, 2 weist nach dem Umformschritt an seiner Innenfläche 9, 12 bereits eine konische Fläche auf, in welche die zweiten Rillen 16 eingeformt sind. An der Außenseite 3, 4 ist der Zahnkranz 6, 8 angeformt. Die Zähne des Zahnkranzes 6, 8 sind in der Nähe der ersten Stirnseite 5, 7 mittels eines Trägerstegs 17 verbunden. Mit dem Bezugszeichen 18 sind Vorläufer-Stege und mit dem Bezugszeichen 19 Vorläufer-Ausnehmungen bezeichnet.

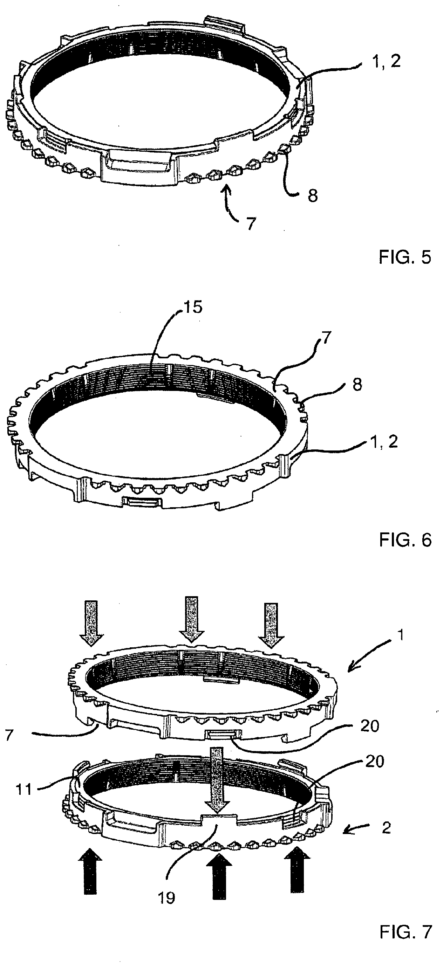

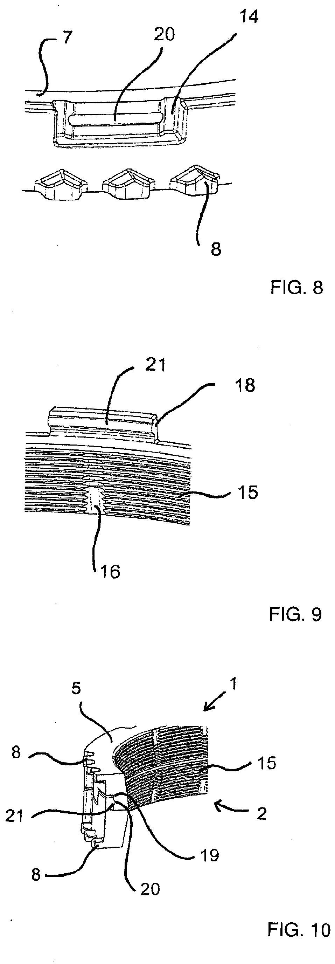

Die Fig. 5 und 6 zeigen perspektivische Ansichten des Synchronringabschnitts 1, 2 nach der spanabhebenden Bearbeitung. Bei der spanabhebenden Bearbeitung wird insbesondere die erste Stirnseite 5, 7 abgedreht, bis der Trägersteg 17 vollständig entfernt ist und die erste Stirnseite 5, 7 die Zähne des Zahnkranzes 6, 8 schneidet (siehe Fig. 6). Ferner werden die ersten Rillen 15 mittels spanabhebender Bearbeitung in die konische Fläche eingedreht. Schließlich werden die Vorläufer-Stege 18 und die Vorläufer-Ausnehmungen 19 spanabhebend bearbeitet. Wie insbesondere aus Fig. 8 ersichtlich ist, wird in die Ausnehmung 14, vorzugsweise an einem darin gebildeten höckerartigen Vorsprung, eine rillenartige Vertiefung 20 eingearbeitet, welche sich in umlaufender Richtung erstreckt. Die abschnittsweise umlaufend sich erstreckenden Stege 13 werden mit einer korrespondierend zur rillenartigen Vertiefung 20 ausgebildeten Verbindungsrippe 21 versehen, welche zu einer Achse A des Synchronringabschnitts 1, 2 vorspringt und sich in umlaufender Richtung erstreckt.

Die so ausgebildeten Synchronringabschnitte 1, 2 werden sodann mit ihren zweiten Stirnseiten 10, 11 so gegeneinander gepresst, dass die Stege 13 in die dazu korrespondierenden Ausnehmungen 14 am gegenüberliegenden anderen Synchronringabschnitt 1, 2 eingreifen. Dabei rasten die Verbindungsrippen 21 jeweils in die rillenartigen Vertiefungen 20 in den Ausnehmungen 14 ein.

Fig. 10 zeigt im Detail die Verbindung zwischen dem ersten 1 und dem zweiten Synchronringabschnitt 2. Wegen des Eingriffs der Verbindungsrippe 21 in die rillenartige Vertiefung 20 werden die Synchronringabschnitte 1, 2 in axialer Richtung fest miteinander verbunden. Wegen der in Umfangsrichtung lediglich abschnittsweisen Ausbildung der Stege 13 und der dazu korrespondierenden Ausbildung der Ausnehmungen 14 werden die Synchronringabschnitte 1, 2 auch in radialer Richtung formschlüssig miteinander verbunden, so dass eine Relativbewegung zwischen den Synchronringabschnitten 1, 2 im gefügten Zustand nicht möglich ist.

### Bezugszeichenliste

- 1: erster Synchronringabschnitt
- 2: zweiter Synchronringabschnitt
- 3: erste Außenseite
- 4: zweite Außenseite
- 5: erste Stirnseite
- 6: erster Zahnkranz
- 7: weitere erste Stirnseite
- 8: zweiter Zahnkranz
- 9: erste Innenfläche
- 10: zweite Stirnseite
- 11: weitere zweite Stirnseite
- 12: zweite Innenfläche
- 13: Steg
- 14: Ausnehmung
- 15: erste Rille
- 16: zweite Rille
- 17: Trägersteg
- 18: Vorläufer-Steg
- 19: Vorläufer-Ausnehmung
- 20: rillenartige Vertiefung
- 21: Verbindungsrippe

- A: Achse

## Patentansprüche

1. Verfahren zur Herstellung eines Doppelkonus-Synchronrings mit folgenden Schritten:
Herstellen eines ersten Synchronringabschnitts (1) und eines zweiten Synchronringabschnitts (2) derart,
dass der erste (1) und der zweite Synchronringabschnitt (2) jeweils an seiner radial umlaufenden Außenfläche (3, 4) in der Nähe einer ersten Stirnseite (5, 7) einen Zahnkranz (6, 8) und jeweils eine von der ersten Stirnseite (5, 7) zu einer gegenüberliegenden zweiten Stirnseite (10, 11) hin sich verjüngende konische Innenfläche (9, 12) aufweist, und
Fügen des ersten (1) und des zweiten Synchronringabschnitts (2),
so dass deren zweite Stirnseiten (10, 11) aufeinanderliegen, **dadurch gekennzeichnet, dass** der mittels Umformen hergestellte Synchronringabschnitt (1, 2) an der zweiten Stirnseite (10, 11) zumindest einen von der zweiten Stirnseite (10, 11) sich in axialer Richtung erstreckenden Verbindungsabschnitt (13) und/oder zumindest eine korrespondierend zum Verbindungsabschnitt (13) ausgebildete Ausnehmung (14) aufweist, und beim Fügen der zumindest eine Verbindungsabschnitt (13) des ersten Synchronringabschnitts (1) in die Ausnehmung (14) am zweiten Synchronringabschnitt (2) eingreift,
wobei der Verbindungsabschnitt (13) ein sich von der zweiten Stirnseite (10, 11) in axialer Richtung erstreckender Steg (13) oder Bolzen ist,
wobei an einer der Achse (A) des Synchronringabschnitts (1, 2) zugewandten Steg-Innenseite eine Verbindungsrippe (21), und in der Ausnehmung (14) eine zur Verbindungsrippe (21) korrespondierende rillenartige Vertiefung (20) jeweils mittels spanabhebender Bearbeitung hergestellt werden, und wobei der erste Synchronringabschnitt (1) mit dem zweiten Synchronringabschnitt (2) durch Herstellen eines Eingriffs der Verbindungsrippe (21) in die dazu korrespondierende rillenartige Vertiefung (20) gefügt wird.

2. Verfahren nach Anspruch 1,
ferner umfassend den Schritt des spanabhebenden Bearbeitens der Synchronringabschnitte (1, 2) jeweils zumindest im Bereich der ersten Stirnseite (5, 7), so dass die erste Stirnseite (5, 7) den Zahnkranz (6, 8) schneidet.

3. Verfahren nach Anspruch 1 oder 2,
wobei das Umformen mittels Gesenkschmieden oder Kaltumformen durchgeführt wird.

4. Verfahren nach einem der vorhergehenden Ansprüche,
wobei der erste (1) und der zweite Synchronringabschnitt (2) in identischer Ausbildung, vorzugsweise unter Verwendung desselben Werkzeugs, hergestellt werden.

5. Verfahren nach einem der vorhergehenden Ansprüche,
wobei in die konischen Innenflächen (9, 12) mittels spanabhebender Bearbeitung radial umlaufende oder gewindeförmige erste Rillen (15) eingearbeitet werden.

6. Verfahren nach einen der Ansprüche 1 bis 5,
wobei auf den konischen Innenflächen (9, 12) Reibmaterialien aufgebracht werden.

## Claims

1. Method for the manufacture of a double-cone synchronizer ring comprising the following steps:
manufacture of a first synchronizer ring portion (1) and a second synchronizer ring portion (2) in such a way
that the first synchronizer ring portion (1) and the second synchronizer ring portion (2) each comprise a toothed rim (6, 8) on their radially circumferential outer face (3, 4) in proximity to a first end face (5, 7) and each comprise an inner face (9, 12) tapering conically from the first end face (5, 7) towards a second, opposing end face (10, 11), and
joining of the first synchronizer ring portion (1) and the second synchronizer ring portion (2), so that their second end faces (10, 11) lie on top of one other,
**characterized in that** the synchronizer ring portion (1, 2) produced by forming on the second end face (10, 11) comprises at least one connecting portion (13) extending in an axial direction from the second end face (10, 11) and/or at least one recess (14) formed so as to correspond to the connecting portion (13), and when joining the at least one connecting portion (13) of the first synchronizer ring portion (1) engages in the recess (14) on the second synchronizer ring portion (2),
wherein the connecting portion (13) is a web (13) or a stud extending from the second end face (10, 11) in an axial direction,
wherein a connecting rib (21) on a web inner side facing the axis (A) of the synchronizer ring portion (1, 2), and a groove-like depression (20) in the recess (14) corresponding to the connecting rib (21) are each produced by machining,
and wherein the first synchronizer ring portion (1) is joined to the second synchronizer ring portion (2) through engagement of the connecting rib (21) in the corresponding groove-like depression (20).

2. Method according to Claim 1, further comprising the step of machining of each of the synchronizer ring portions (1, 2) at least in the area of the first end face (5, 7), so that the first end face (5, 7) meets the toothed rim (6, 8).

3. Method according to Claim 1 or 2, wherein the forming is performed by drop forging or cold forming.

4. Method according to one of the preceding claims, wherein the first synchronizer ring portion (1) and the second synchronizer ring portion (2) are made to an identical design, preferably using the same tool.

5. Method according to one of the preceding claims, wherein radially circumferential or thread-shaped first grooves (15) are sunk into the conical inner faces (9, 12) by machining.

6. Method according to one of Claims 1 to 5, wherein friction materials are applied to the conical inner faces (9, 12).

## Revendications

1. Procédé de fabrication d'une bague de synchronisation à double cône, comprenant les étapes suivantes :
fabrication d'une première portion de bague de synchronisation (1) et d'une deuxième portion de bague de synchronisation (2) de telle sorte
que la première (1) et la deuxième portion de bague de synchronisation (2) possèdent respectivement, au niveau de leur surface extérieure (3, 4) circonférentielle radiale, une couronne dentée (6, 8) à proximité d'un premier côté frontal (5, 7) et une surface intérieure (9, 12) conique qui rétrécit depuis le premier côté frontal (5, 7) en direction d'un deuxième côté frontal (10, 11) se trouvant à l'opposé, et
aboutage de la première (1) et de la deuxième portion de bague de synchronisation (2) de telle sorte que leurs deuxièmes côtés frontaux (10, 11) reposent l'un sur l'autre,
**caractérisé en ce que**
la portion de bague de synchronisation (1, 2) fabriquée par façonnage possède au niveau du deuxième côté frontal (10, 11) au moins une portion d'assemblage (13) qui s'étend dans la direction axiale depuis le deuxième côté frontal (10, 11) et/ou au moins une cavité (14) configurée de manière à correspondre à la portion d'assemblage (13) et, lors de l'aboutage, l'au moins une portion d'assemblage (13) de la première portion de bague de synchronisation (1) vient en prise dans la cavité (14) sur la deuxième portion de bague de synchronisation (2),
la portion d'assemblage (13) étant un élément jointif (13) ou un axe qui s'étend dans la direction axiale depuis le deuxième côté frontal (10, 11),
une nervure d'assemblage (21) sur un côté intérieur d'élément jointif faisant faxe à l'axe (A) de la portion de bague de synchronisation (1, 2) et, dans la cavité (14), une empreinte (20) de type cannelure correspondant à la nervure d'assemblage (21) étant respectivement produite par usinage avec enlèvement de copeaux,
et
la première portion de bague de synchronisation (1) est aboutée avec la deuxième portion de bague de synchronisation (2) en vue d'établir une mise en prise de la nervure d'assemblage (21) dans l'empreinte (20) de type cannelure correspondante.

2. Procédé selon la revendication 1, comprenant en outre l'étape d'usinage avec enlèvement de copeaux des portions de bague de synchronisation (1, 2) respectivement au moins dans la zone du premier côté frontal (5, 7), de sorte que le premier côté frontal (5, 7) coupe la couronne dentée (6, 8).

3. Procédé selon la revendication 1 ou 2, le façonnage étant réalisé par matriçage ou par façonnage à froid.

4. Procédé selon l'une des revendications précédentes, la première (1) et la deuxième portion de bague de synchronisation (2) étant fabriquées dans une configuration identique, de préférence en utilisant le même outil.

5. Procédé selon l'une des revendications précédentes, les surfaces intérieures (9, 12) coniques étant incorporées au moyen de l'usinage avec enlèvement de copeaux de premières cannelures (15) circonférentielles dans le sens radial ou en forme de filetage.

6. Procédé selon l'une des revendications 1 à 5, des matériaux de friction étant appliqués sur les surfaces intérieures (9, 12) coniques.
